# EUROPÄISCHE PATENTSCHRIFT

(11) **EP 1 591 283 B1**
(45) Veröffentlichungstag und Bekanntmachung des Hinweises auf die Patenterteilung: **31.01.2007**
(21) Anmeldenummer: 05101493.4
(22) Anmeldetag: 28.02.2005
(51) Int. Cl.: B60H 1/00, H02K 23/66

(54) **Verfahren zur Ansteuerung eines Klimagebläses**
Control method for an air conditioning fan
Procédé de commande pour un ventilateur d'un système de climatisation

(30) Priorität: 27.04.2004 DE 102004020428
(43) Veröffentlichungstag der Anmeldung: 02.11.2005
(73) Patentinhaber: ROBERT BOSCH GMBH, 70442 Stuttgart (DE)
(72) Erfinder: Eisenhardt, Harald, 71277, Rutesheim (DE); Mueller, Andreas, 71735, Eberdingen (DE)

(56) Entgegenhaltungen:
- DE-A1- 3 932 272
- DE-A1- 4 201 164
- GB-A- 2 057 756

## Beschreibung

Die Erfindung geht aus von einem Verfahren zur Ansteuerung eines Klimagebläses nach dem Oberbegriff des Anspruchs 1.

DE-A-4 201 164 beschreibt ein solches Verfahren.

### Stand der Technik

Klimagebläse, wie sie beispielsweise auch in Kraftfahrzeugen genutzt werden, sollen auf Anforderung bzw. bei Vorliegen vordefinierter Betriebsbedingungen einen Luftstrom erzeugen, der typischer Weise aus einem ersten Außenbereich in einen zweiten Innenbereich gelenkt wird. Bei einem Kraftfahrzeug ist dieser Außenbereich mit der Umgebung des Kraftfahrzeuges identifizierbar, wohingegen der Innenbereich typischer Weise dem Fahrzeuginnenraum und insbesondere dem Insassenraum entspricht. Typische Aufgaben eines solchen Klimagebläses sind, in Abhängigkeit von den Umgebungsparametern, insbesondere der Umgebungs- bzw. Außentemperatur, die Versorgung des Innenraums mit warmer bzw. kalter Luft.

Für den Kraftfahrzeugbereich sind Dachmodule mit Solarzellen erhältlich, welche bei Sonneneinstrahlung Strom zum Betrieb eines Klimagebläses liefern. Diese Energie wird dazu benutzt, um Frischluft ins Fahrzeug einzublasen, insbesondere wenn sich das Fahrzeug im Stillstand in der Sonne aufheizt. Die Lüfteransteuerung erfolgt in diesem Betriebszustand durch einen externen DC/DC-Wandler oder durch einen PWM (Pulsweitenmodulation) Gebläseregler mit Solareingang. Eine solche solare Standbelüftung sorgt im Sommer in vorteilhafter Weise für eine Absenkung der Fahrzeuginnenraumtemperatur eins in der Sonne stehenden, insbesondere parkenden Fahrzeugs. Im Winter ist eine solche Funktion jedoch störend, da selbst bei ausreichender Sonnenbestrahlung unangenehm kalte Luft ins Fahrzeug geblasen würde.

Der Erfindung liegt die Aufgabe zugrunde, den Solarbetrieb eines Klimagebläses mit einfachen und kostengünstigen Mitteln lediglich bei ausreichend hohen Temperaturen, insbesondere ausreichend hohen Außen- bzw. Umgebungstemperaturen zuzulassen.

Die der Erfmdung zugrundeliegende Aufgabe wird gelöst durch ein Verfahren zur Ansteuerung eines Klimagebläses mit den Merkmalen des Anspruchs 1.

### Vorteile der Erfindung

Bei dem erfindungsgemäßen Verfahren zur Ansteuerung eines Klimagebläses, insbesondere zur Steuerung des Solarbetriebes eines Klimagebläses für ein Kraftfahrzeug, wird das Klimagebläse abhängig von einem Temperaturgrenzwert derart angesteuert, dass ein Luftmassenstrom von einem ersten Außenbereich in einen zweiten Innenbereich erzeugbar ist. Für die Bestimmung des Temperaturgrenzwertes zur Ansteuerung des Klimagebläses wird ein im Gebläseregler des Klimagebläses vorhandenes, temperatursensitives Bauelement, wie beispielsweise ein Halbleiterelement mit einem p-n-Übergang oder ein anderes, als Temperaturfühler der Elektronikkomponenten des Gebläsereglers nutzbares Bauelement verwendet. Durch die Verwendung des ohnehin vorhandenen Temperaturfühlers, der dem Temperaturschutz der Leistungshalbleiter des Gebläsereglers dient, ist es in vorteilhafter Weise möglich, den Solarbetrieb des Klimagebläses in Abhängigkeit von einem Temperaturgrenzwert zu ermöglichen, ohne zusätzliche Schalter, insbesondere Temperaturschalter bzw. Temperaturfühler zu benötigen.

Durch die in den abhängigen Ansprüchen aufgeführten Maßnahmen sind vorteilhafte Weiterbildungen und Verbesserungen des in dem unabhängigen Anspruch angegebenen Verfahrens möglich.

Insbesondere wird der Temperaturgrenzwert zur Ansteuerung und Aktivierung des Klimagebläses in Abhängigkeit von der Außentemperatur gewählt. Auf diese Weise ist es möglich, über die Außen- bzw. Umgebungstemperatur zwischen einem Sommer- oder einem Winterbetrieb des Gebläses, insbesondere der solaren Standbelüftung, zu unterscheiden.

Die aktuell vorliegende Außentemperatur wird dabei durch einen Messwert des im Gebläseregler vorhandenen Temperaturfühlers für den Elektronikschutz abgeschätzt.

Der Gebläseregler des Klimagebläses besitzt zum Schutz der Leistungshalbleiter einen Temperaturfühler, wie beispielsweise ein NTC-Element, welches beispielsweise auf einer Leiterplatte der Elektronikkomponenten des Gebläsereglers angeordnet ist. Zur Entwärmung der Halbleiter sind diese mittels eines wärmeleitenden Materials an einen Kühlkörper angebunden, der die Verlustwärme der Halbleiterbauelemente an die Umgebungstemperatur abgibt. Die vom Temperaturfühler gemessene Temperatur ist somit die Umgebungstemperatur zuzüglich der Erwärmung, welche durch die Elektronik und insbesondere durch die Halbleiterbauelemente erzeugt wird. Die Erwärmung durch die Elektronik hängt dabei vom jeweiligen Betriebszustand des Gebläses und somit vom Betriebszustand der Elektronikkomponenten zu seiner Ansteuerung ab. Wird der Wert, der vom Temperaturfühler gemessenen Temperatur nunmehr um einen Temperaturwert korrigiert, der der Eigenerwärmung der Halbleiter der Gebläseansteuerung entspricht, so ergibt sich hiermit ein Maß für die aktuelle Umgebungs- bzw. Außentemperatur.

Auf diese vorteilhafte Weise ist es möglich mit einem Temperaturfühlerelement, d.h. mit einem temperatursensitiven Bauelement, welches insbesondere der Temperatur-überwachung der Leistungshalbleiter des Gebläsereglers dient, gleichzeitig auch ein Maß für die Außentemperatur bzw. die Umgebungstemperatur, beispielsweise eines Kraftfahrzeuges zu erhalten.

An Hand der so gewonnenen Umgebungstemperatur kann nun beispielsweise zwischen einem Sommer- oder einem Winterbetrieb des Klimagebläses unterschieden werden. Wird ein vorgebbarer Temperaturgrenzwert erreicht, und wird zudem mittels des erfindungsgemäßen Verfahrens detektiert, dass die Bedingungen für den Sommerbetrieb vorliegen, so wird die solare Standbelüftung angesteuert, so dass eine Absenkung der Fahrzeuginnenraumtemperatur eines in der Sonne stehenden, insbesondere parkenden Fahrzeugs ermöglicht wird. Wird jedoch mit dem erfindungsgemäßen Verfahren der Winterbetrieb dadurch detektiert, dass die Außen- bzw. Umgebungstemperatur unter einer vorgebbaren Unterscheidungstemperatur liegt, so wird die solare Standbelüftung nicht angesteuert, da eine solche Funktion im Winter als störend empfunden würde. Aufgrund ausreichender Sonnenbestrahlung würde zwar in diesem Fall über das Solarmodul genügend Energie zum Betrieb des Gebläses zur Verfügung stehen, es würde jedoch lediglich unangenehm kalte Luft ins Fahrzeug geblasen.

In vorteilhafter Weise ist bei dem erfindungsgemäßen Verfahren zur Ansteuerung eines Klimagebläses die durch die Halbleiter erzeugte Eigenerwärmung mittels zumindest einer, vorzugsweise in einem Datenspeicher hinterlegten Kennlinie berücksichtigt. Die Erwärmung durch die Halbleiter hängt von deren jeweiligem Betriebszustand ab. Über die Kennlinien, die in einer entsprechenden Software hinterlegt sein können, wird die Eigenerwärmung der Halbleiter von der durch den Temperaturfühler ermittelten Temperatur abgezogen. Die so erhaltene, korrigierte Temperatur entspricht der Umgebungstemperatur. Um auch schnelle, d.h. dynamische Zustandsänderungen der Halbleiter und die damit einhergehenden Temperaturänderungen berücksichtigen zu können, werden thermische Zeitkonstanten ebenfalls vorteilhafter Weise softwaremäßig hinterlegt. So kann auch bei einem schnellen, abrupten Wechsel des Betriebszustandes des Gebläsereglers der Temperaturausgleich des gesamten Reglers berücksichtigt werden.

An Hand der mit dem erfindungsgemäßen Verfahren ermittelten Außen- bzw. Umgebungstemperatur kann in einfacher Weise zwischen Sommer- oder Winterbetrieb, d.h. zwischen "Lüften" bzw. "Nicht-Lüften" unterschieden werden. Diese Unterscheidung erfolgt bevorzugt mit einer Temperaturhystherese, um sporadische d.h. zufällige Wechsel zwischen Sommer- und Winterbetrieb zu verhindern.

Das erfindungsgemäße Verfahren zur Ansteuerung eines Klimagebläses lässt sich in vorteilhafter Weise im ohnehin vorhandenen Mikrocontroller ohne wesentliche Mehrkosten softwareseitig ablegen. Über die vom Temperaturfühler gemessene Temperatur, sowie die ggf. zeitabhängigen Kennlinien der Leistungshalbleiter lässt sich dabei rechnerisch die Außen- bzw. Umgebungstemperatur bestimmen und das Klimagebläse in gewünschter Weise ansteuern.

Das erfindungsgemäße Verfahren ermöglicht in vorteilhafter Weise die Ansteuerung eines Klimagebläses, insbesondere die Steuerung des Solarbetriebes eines Klimagebläses für ein Kraftfahrzeug, bei dem der Solarbetrieb nur bei ausreichend hohen Umgebungs-bzw. Außentemperaturen zugelassen wird. Das erfindungsgemäße Verfahren kommt dabei ohne zusätzliche Schalter oder Temperaturfühlerelemente aus. Die Funktion kann allein durch ein softwareseitig in einem ohnehin vorhandenen Mikrocontroller installiertes Steuer- und Auswerteprogramm ohne Mehrkosten realisiert werden.

Weitere Vorteile des erfindungsgemäßen Verfahrens ergeben sich aus der nachfolgenden Beschreibung eines Ausführungsbeispiels.

### Zeichnung

In der Zeichnung ist ein Ausführungsbeispiel des erfindungsgemäßen Verfahrens dargestellt, das in der nachfolgenden Beschreibung näher erläutert werden soll. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen, die somit als in diesem Text ebenfalls offenbart anzusehen sind.

Es zeigen
- Fig. 1: eine Detailansicht des mechanischen Aufbaus eines Gebläsereglers in einem Querschnitt,
- Fig. 2: ein Ablaufdiagramm über einige, wesentliche Schritte des erfindungsgemäßen Verfahrens.

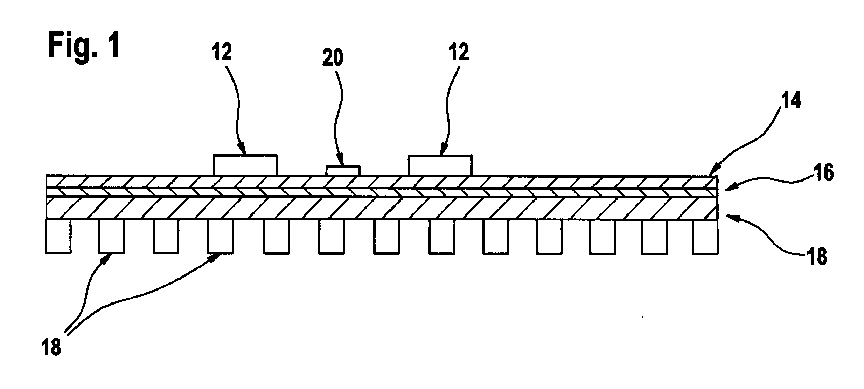

Fig. 1 zeigt eine Detailansicht eines Gebläsereglers 10 zur Ansteuerung eines Klimagebläses. Der Gebläseregler 10 ist über entsprechende Verbindungsmittel mit einem in Fig. 1 nicht dargestellten Modul, beispielsweise einem Dach- oder Schiebedachmodul verbunden, welches die Solarzellen zur Energieversorgung des Gebläsereglers und des Klimagebläses aufweist. Diese Solarzellen liefern bei entsprechender Sonneneinstrahlung den Strom zum Betrieb des Klimagebläses. Auf diese Weise lässt sich insbesondere eine solare Standbelüftung realisieren, die im Sommer bei hohen Außentemperaturen für eine Absenkung der Fahrzeuginnenraumtemperatur sorgen kann, indem Frischluft in das Fahrzeug geblasen wird. Auf diese Weise kann die Überhitzung eines passiv in der Sonne stehenden Fahrzeugs über einen großen Temperaturbereich vermieden werden. Die Lüfteransteuerung selbst erfolgt in diesem Betriebszustand durch einen externen DC/DC-Wandler oder beispielsweise auch durch einen PWM-Gebläseregler mit Solareingang.

Die Gebläseregelung erfolgt, in bekannter und daher nicht näher zu beschreibender Weise, u. a. durch eine Anzahl von Elektronik- und Halbleiterbauelementen 12, die auf einer Leiterplatte 14 des Gebläsereglers 10 montiert sind. Die Leiterplatte 14 ist über ein thermisch leitendes Material 16 mit einem Kühlkörper 18 verbunden. Der Kühlkörper 18 gibt die im Betrieb erzeugte Verlustwärme des Gebläsereglers an die Umgebung ab, was zu einer Erhöhung der Umgebungstemperatur führt. Der Gebläseregler 10 besitzt insbesondere zum Schutz der Leistungshalbleiter 12 einen Temperaturfiihler 20, beispielsweise ein NTC-Element, welches ebenfalls auf der Leiterplatte 14 angeordnet ist. Der Temperaturfühler 20 kann darüber hinaus aber auch durch jedes andere temperatursensitive Bauelement, beispielsweise einem Bauteil mit einem Halbleiter p-n-Übergang realisiert sein. Dazu würde beispielsweise eine Kennlinie dieses Bauteils, die Änderungen der Eigenschaften des Bauteils in Abhängigkeit von dessen Temperatur ausweist, vorzugsweise in einem Speicherelement abgelegt sein. Durch die Detektion von solchen Änderungen am Bauteil kann dann auf die Temperatur des Bauteils geschlossen werden. In diesem verallgemeinerten Sinne ist im folgenden nur noch von einem Temperaturfühler 20 die Rede.

Die vom Temperaturfühler 20 ermittelte Temperatur ist somit die Umgebungs- bzw.
Außentemperatur sowie eine Temperatur, die auf die Erwärmung durch die Halbleiter 12 der Gebläsesteuerung zurückzuführen ist. Die jeweilige Erwärmung durch die Halbleiter-bzw Elektronikkomponenten hängt dabei von deren jeweiligen Betriebszustand ab. Wird die vom Temperaturfühler 20 detektierte Temperatur, in noch zu beschreibender Weise, entsprechend ausgewertet, so ergibt sich ein Maß für die Umgebungstemperatur und somit eine Einschätzung über die vorliegende Außentemperatur.

In alternativen Ausführungsformen können die Halbleiter 12 auch direkt auf einem oder mehreren Kühlkörpern angeordnet sein. In vorteilhafter Weise sitzt der Temperaturfühler 20 in einer solchen Ausführungsform ebenfalls auf diesem Kühlkörper um eine Überhitzung der Leistungshalbleiter frühzeitig zu detektieren. Aus einer am Kühlkörper detektierten Temperatur lässt sich in bekannter Weise auf die Temperatur des Halbleiterbauelementes schließen.

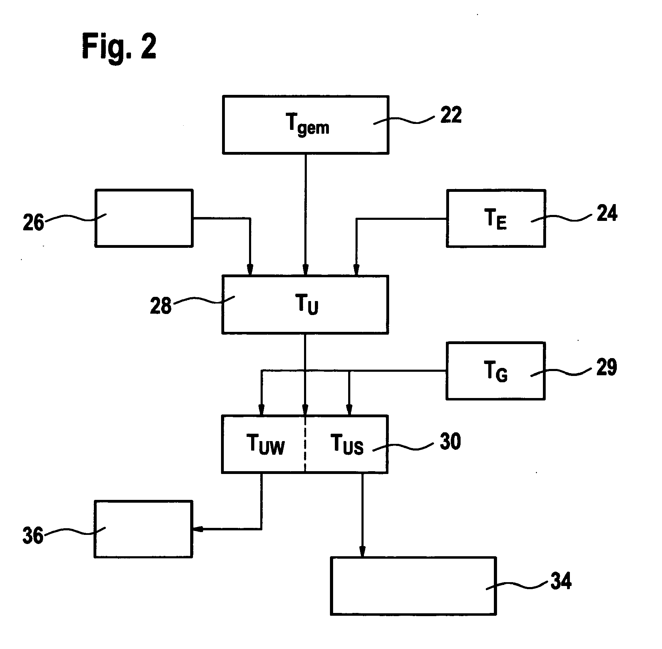

Fig. 2 zeigt einige, wesentliche Schritte des erfindungsgemäßen Verfahrens zur Ansteuerung eines Klimagebläses. Im Schritt 22 wird mittels eines Temperaturfiihlerelementes 20, welches vorzugsweise dem Schutz der Leistungshalbleiterelemente 12 eines Gebläsereglers dient, die aktuelle Temperatur T_{gem} am Ort des Fühlerelementes 20 gemessen und zur weiteren Verarbeitung dieser Daten bereitgestellt. Die der jeweiligen Betriebsbedingung des Klimagebläses entsprechende Eigenerwärmung der Halbleiter- und Elektronikelemente wird in Schritt 24 an Hand von abgelegten Kennlinien der Bauelemente ermittelt. Dazu kann beispielsweise die von jedem Leistungshalbleiter erzeugte Wärmemenge in Abhängigkeit von der Leistungsaufnahme des Halbleiterbauelementes, sowie von seiner aktiven Betriebsdauer abgeleitet werden.

Über die entsprechenden Wärmekapazitäten zwischen den elektronischen Bauelementen und dem Erfassungsort des Temperaturfühlers 20 lässt sich daraus diejenige Temperatur bestimmen, die aus der Eigenerwärmung der Halbleiterbauelemente resultiert. Hierzu sind ggf. weitere Daten, wie beispielsweise die aktive Betriebszeit der Halbleiterbauelemente heranzuziehen, wie dies schematisch durch Schritt 26 der Fig. 2 angedeutet ist.

Im Verfahrensschritt 28 wird die vom Temperaturfühler 20 ermittelte Temperatur T_{gem} um die durch die Eigenerwärmung der Halbleiterbauelemente erzeugte Temperatur T_{E} korrigiert. Dieses rechnerisch ermittelte Ergebnis entspricht der Umgebungstemperatur T_{U} und ist ein Maß für die vorliegende Außentemperatur beispielsweise eines Fahrzeuges. Die Außentemperatur ermöglicht sodann die Unterscheidung über das Vorliegen von Sommer- oder Winterbetrieb für das Klimagebläse. Dies ist mit den beanspruchten Verfahren insbesondere ohne zusätzliche Komponenten, insbesondere ohne zusätzliche Komponenten für die Temperaturerfassung möglich. Die Funktion kann allein durch eine entsprechende Software in einem ohnehin vorhandenen Mikrocontroller der Gebläsesteuerung ohne Mehrkosten realisiert werden.

An Hand der so gewonnen Umgebungs- bzw. Außentemperatur wird nun zwischen Sommer- oder Winterbetrieb, d.h. zwischen "Lüften" oder "Nicht-Lüften", unterschieden. Entspricht die Umgebungs- bzw. die Außentemperatur T_{U} einer Temperatur, die einem Intervall zugeordnet ist, welches den Sommerbetrieb charakterisiert (T_{U} = T_{US}) und übersteigt diese Temperatur T_{US} eine mit Verfahrensschritt 29 vorgebbare Grenztemperatur T_{G}, so wird in Verfahrensschritt 30 ein Ansteuersignal 34 zum Betrieb des Klimagebläses erzeugt.
Das Klimagebläse kann unter diesen Betriebsbedingungen beispielsweise für eine vorgegebene Zeit eingeschaltet werden, um die Temperatur im Fahrzeuginnenraum zu senken. Ebenso ist es möglich, das Klimagebläse solang zu aktivieren, bis die Temperatur im Fahrzeuginnenraum einen bestimmten vorgebbaren Wert, beispielsweise die Außentemperatur erreicht hat.

Die Grenztemperatur T_{G}, bei der das Klimagebläse im Sommerbetrieb aktiviert wird, wird im Verfahrensschritt 29 dem Steuerprogramm zur Verfügung gestellt und im beschriebenen Verfahrensschritt 30 mit der aktuell vorliegenden "Sommertemperatur" T_{US} verglichen. Die Grenztemperatur T_{G} kann in Verfahrensschritt 29 beispielsweise vom Fahrzeugnutzer manuell vorgegeben sein bzw. auch bereits werkseitig in einem entsprechenden Steuerprogramm abgelegt sein.

Entspricht die in Verfahrensschritt 28 ermittelte Umgebungstemperatur T_{U} einer Temperatur in einem Intervall von Temperaturen, welche den Winterbetrieb der solaren Standbelüftung kennzeichnet (T_{U} = T_{UW}), so wird nach Temperaturvergleich in Verfahrensschritt 30 gemäß Verfahrensschritt 36 kein Ansteuersignal für das Klimagebläse generiert.

Die solare Standbelüftung, die im Sommerbetrieb für eine Absenkung der Fahrzeuginnenraumtemperatur eines in der Sonne stehenden Fahrzeugs sorgt, ermöglicht es auf diese Weise, dass im Winterbetrieb keine unangenehm kalte Luft ins Fahrzeug geblasen wird, obwohl bei ausreichender Sonnenbestrahlung auch im Winter genügend Energie durch das Solarmodul zur Verfügung stehen würde, um das Gebläse zu betreiben. Die Absenkung der Fahrzeuginnenraumtemperatur durch die solare Standbelüftung ist somit lediglich auf den Sommerbetrieb einschränkbar und wird im Winterbetrieb, in dem eine solche Funktion als störend empfunden würde, automatisch ohne zusätzliche Schaltelemente blockiert.

Mit dem erfindungsgemäßen Verfahren ist somit eine automatische Abschaltfunktion realisierbar, die weder einen separaten Schalter im Fahrgastraum noch einen externen Temperaturschalter benötigt, um den Betrieb einer solaren Standbelüftung bei zu kalten Temperaturen zu vermeiden. Das erfindungsgemäße Verfahren ermöglicht es, das Klimagebläse nur bei ausreichend hohen Temperaturen in gewünschter Weise zuzuschalten, ohne dass zusätzliche Komponenten zum Betrieb der solaren Standbelüftung notwendig wären.

## Patentansprüche

1. Verfahren zur Ansteuerung eines Klimagebläses, insbesondere zur Steuerung des Solarbetriebes eines Klimagebläses für ein Kraftfahrzeug, bei dem das Klimagebläse bei Erreichen eines Temperaturgrenzwert (T_{G}) für die Umgebungstemperatur (T_{U},T_{US},T_{UW}), einen Luftmassenstrom von einem ersten, Außenbereich in einen zweiten, Innenbereich ermöglicht, **dadurch gekennzeichnet, dass** für die Bestimmung der Umgebungstemperatur (T_{U}) ein in einem Gebläseregler (10) des Klimagebläses vorhandenes, temperatursensitives Bauelement (20) der Elektronikkomponenten (12) des Gebläsereglers (10) genutzt wird.

2. Verfahren nach Anspruch 1, **dadurch gekennzeichnet, dass** der Temperaturgenzwert (T_{G}) in Abhängigkeit von der Umgebungstemperatur (T_{U},T_{US},T_{UW}) gesetzt wird.

3. Verfahren nach Anspruch 1 oder 2, **dadurch gekennzeichnet, dass** die Umgebungstemperatur (T_{U},T_{US},T_{UW}) durch einen Messwert (T_{gem}) eines im Gebläseregler (10) vorhandenen, temperatursensitiven Bauelements (20), welches vorzugsweise als Temperaturfühler für den Temperaturschutz der Elektronikkomponenten (12) dient, abgeschätzt wird.

4. Verfahren nach Anspruch 3, **dadurch gekennzeichnet, dass** die vom Temperaturfühler (20) gemessene Temperatur (T_{gem}) um eine Temperatur (T_{E}) korrigiert wird, die der Eigenerwärmung der Elektronikkomponenten (12) der Gebläsesteuerung (10) entspricht, um ein Maß für die Umgebungstemperatur (T_{U}) zu erlangen.

5. Verfahren nach Anspruch 4, **dadurch gekennzeichnet, dass** die Eigenerwärmung der Elektronikkomponenten (12) der Gebläsesteuerung (10) mittels zumindest einer, vorzugsweise in einem Datenspeicher hinterlegten Kennlinie berücksichtigt wird.

6. Verfahren nach Anspruch 5, **dadurch gekennzeichnet, dass** zeitliche Zustandsänderungen der Eigenerwärmung der elektronischen Bauelemente (12) der Gebläsesteuerung (10) mittels zumindest einer, vorzugsweise in einem Datenspeicher der Gebläsesteuerung (10) hinterlegten thermischen Zeitkonstanten berücksichtigt werden.

7. Microcontroller mit einem Programmcode zur Ausführung des Verfahrens nach einem der vorhergehenden Ansprüche.

## Claims

1. Method for actuating an air conditioning blower, in particular for controlling the solar operation of an air conditioning blower for a motor vehicle, in which the air conditioning blower permits an air mass flow from a first external region into a second internal region when a temperature limiting value (T_{G}) for the ambient temperature (T_{U}, T_{US}, T_{UW}) is reached, **characterized in that** a temperature-sensitive part (20), present in a blower controller (10) of the air conditioning blower, of the electronic components (12) of the blower controller (10) is used to determine the ambient temperature (T_{U}).

2. Method according to Claim 1, **characterized in that** the temperature limiting value (T_{G}) is set as a function of the ambient temperature (T_{U}, T_{US}, T_{UW}).

3. Method according to Claim 1 or 2, **characterized in that** the ambient temperature (T_{U}, T_{US}, T_{UW}) is estimated by a measured value (T_{gem}) of a temperature-sensitive part (20) which is present in the blower controller (10) and preferably serves as a temperature sensor for protecting the temperature of the electronic components (12).

4. Method according to Claim 3, **characterized in that** the temperature (T_{gem}) which is measured by the temperature sensor (20) is corrected by a temperature (T_{E}) which corresponds to the intrinsic heating of the electronic components (12) of the blower controller (10) in order to obtain a measure of the ambient temperature (T_{U}).

5. Method according to Claim 4, **characterized in that** the intrinsic heating of the electronic components (12) of the blower controller (10) is taken into account by means of at least one characteristic curve which is preferably stored in a data memory.

6. Method according to Claim 5, **characterized in that** changes over time in the state of the intrinsic heating of the electronic components (12) of the blower controller (10) are taken into account by means of at least one thermal time constant which is preferably stored in a data memory of the blower controller (10).

7. Microcontroller having a program code for carrying out the method according to one of the preceding claims.

## Revendications

1. Procédé de commande pour un ventilateur de climatiseur notamment pour un fonctionnement solaire de ce ventilateur dans un véhicule, selon lequel lorsqu'une valeur limite (T_{G}) est atteinte pour la température ambiante (Tu, Tus, Tuw), le ventilateur du système de climatisation permet un flux massique d'air d'une première zone extérieure dans une seconde zone intérieure,
**caractérisé en ce que**
pour déterminer la température ambiante (Tu) on utilise un élément sensible à la température, présent dans un régulateur (10) du ventilateur du système de climatisation, faisant partie des composants électroniques (12) du régulateur (10) du ventilateur.

2. Procédé selon la revendication 1,
**caractérisé en ce que**
la valeur limite de la température (T_{G}) est fixée en fonction de la température ambiante (T_{U}, T_{US}, T_{UW}).

3. Procédé selon la revendication 1 ou 2,
**caractérisé en ce que**
la température ambiante (Tu, Tus, Tuw) est estimée par une valeur de mesure (T_{gem}) d'un élément (20) sensible à la température, présent dans le régulateur (10) du ventilateur, élément qui sert de préférence de sonde de température pour la protection de la température des composants électroniques.

4. Procédé selon la revendication 3,
**caractérisé en ce que**
la température (T_{gem}) mesurée par la sonde de température (20) est corrigée d'une température (T_{E}) qui correspond à l'échauffement propre des composants électroniques (12) de la commande par ventilateur (10), afin d'obtenir une mesure de la température ambiante (T_{U}).

5. Procédé selon la revendication 4,
**caractérisé en ce que**
l'échauffement propre des composants électroniques (12) de la commande par ventilateur (10) est pris en compte au moyen d'au moins une courbe caractéristique déposée de préférence dans une mémoire de données.

6. Procédé selon la revendication 5,
**caractérisé en ce que**
les variations temporelles de l'état de l'échauffement propre des éléments électroniques (12) de la commande par ventilateur (10) sont pris en compte au moyen d'au moins une constante de temps thermique déposée de préférence dans une mémoire de données de la commande par ventilateur (10).

7. Microcontrôleur avec un code de programme, pour l'exécution du procédé selon l'une des revendications précédentes.
